# EUROPEAN PATENT APPLICATION

(11) **EP 1 942 389 A1**
(43) Date of publication of application: **09.07.2008**
(21) Application number: 07024370.4
(22) Date of filing: 17.12.2007
(51) Int. Cl.: G05D 23/275, H01H 37/70

(54) **An improved limiting thermostat**

(30) Priority: 21.12.2006 IT MI20060454 U
(71) Applicant: T&G spa, 24040 Burago molgora (MI) (IT)
(72) Inventor: Ronchi, Virginio, 24040 Burago Molgora (MI) (IT)
(74) Representative: Kratter, Carlo

(57) **Abstract**

A limiting thermostat able to connect, upon the measurement of a pre-set temperature by a thermometric probe (1), a first electric terminal (2), normally connected with a second terminal (3), with a third terminal (4), comprising a box body (5) able to house: a conversion device (8), connected to the thermometric probe (1) and able to transform the signal of the thermometric probe into an axial movement of a wall (9), a transmission element (10) able to transmit the axial movements of the wall to a spring foil element (11), movable between two operative positions (A,B), and a push-button member (12) acting whereon, from the exterior of the body, able to return the foil element (11) from the second operative position (B) to the first position (A), and a member (13) for regulating the conversion member (8) to regulate the predetermined temperature, in which the foil element (11) is provided in the body (5) in an intermediate position between the conversion member (8) and the push-button member (12).

## Description

The present invention relates to a limiting thermostat of the type indicated in the precharacterising part of the main claim.

Known thermostats of the kind indicated above generally require relatively complicated assembly work and are relatively bulky. Known thermostats, for example, comprise a metallic part able to house: the member for converting the temperature signal into a mechanical displacement, the push-button member and one of the electric terminals, and a part made of plastic able to house: the foil element and two of the electric terminals. This type of solution complicates the assembly of the thermostat and prolongs the time required for its production and impacts unfavourably on the final costs of the product. Moreover, in known thermostats the electric terminals project from the thermostat body from different walls, which limits the possibilities of final installation of the thermostat to a limited series of positions. Similar limitations entail also the positioning, in known thermostats, of the elements for fastening the thermostat and/or the positioning of the member for regulating the limit temperature of the thermostat. Particularly complicated, bulky and difficult to construct is, in known thermostats, also the conformation of the foil element.

An object of the present innovation is to simplify the conformation and the arrangement of the components of known thermostats, to reduce the time and costs required to produce and assemble said components and the thermostat itself, and at the same time to facilitate and make more versatile securing the thermostat to the members whereto they are to be associated.

These and other objects that will be readily apparent to those skilled in the art are achieved by a thermostat in accordance with the characterising part of the appended claims.

For a better understanding of the present innovation, drawings are provided by way of non limiting example, in which:
fig. 1 shows a schematic perspective view of a thermostat according to the invention, partially disassembled,
fig. 2 shows an enlarged partial schematic view thereof,
figs. 3 and 4 show top schematic views of a longitudinal section of a component,
figs. 5 and 6 show perspective schematic views according to different angles,
figs. 7A, 7B partially sectioned and disassembled schematic views of a variant with respect to the embodiment of the previous figures, shown in two different possible operative situations,
fig. 8 shows a partially sectioned schematic view of the variant of fig. 7B, rotated 90° and simplified,
fig. 9 shows an enlarged top view of two components of the variant of fig. 7.

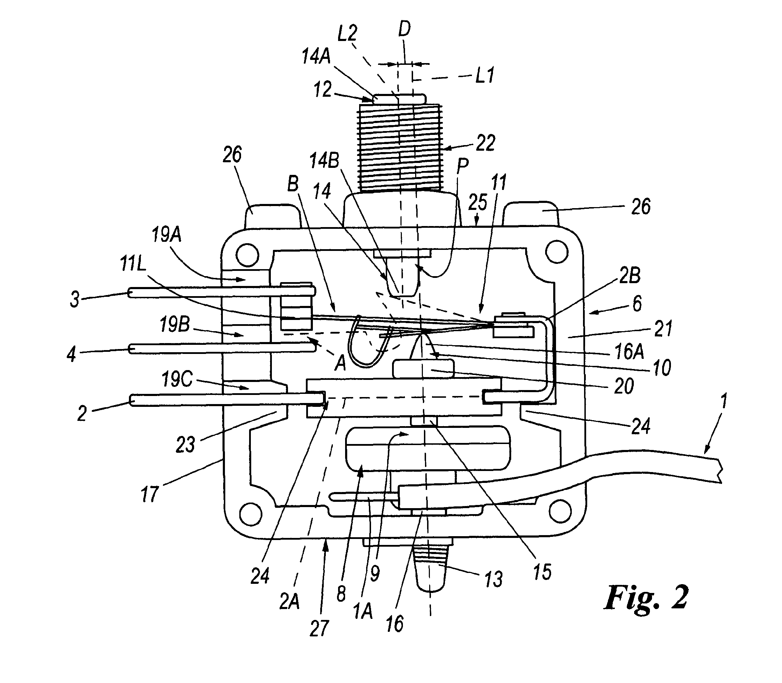

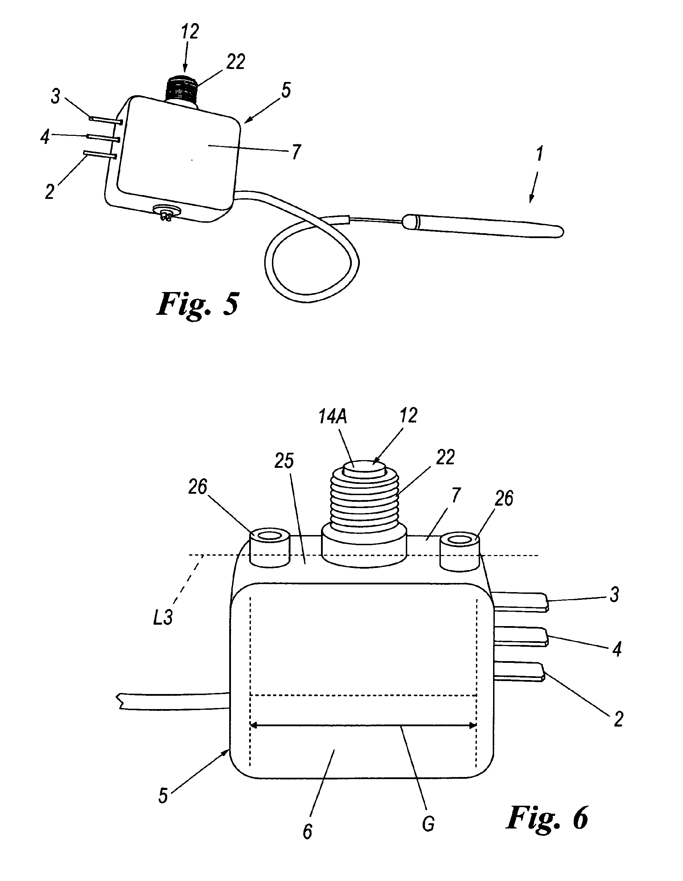

With reference to the aforementioned figures, they show a limiting thermostat of the type able to connect, when a thermometric probe 1 measures a pre-determined temperature, a first electric terminal 2, normally connected to a second terminal 3, with a third terminal 4, of a usual control circuit (not shown). The thermostat comprises a box body 5, formed by a first part 6 able to house all the components of the thermostat and by a lid 7 (fig. 5) for said first part. The first part 6 houses within it: a portion of the terminals 2-4, a conversion member 8, connected through a tube 1A to the thermometric probe 1 and able to transform the signal of the thermometric probe into an axial movement of a wall 9, able to move along an axis L1 with variations in the temperature measured by the bulb L1 of said probe, a transmission element 10 able to transmit the axial movements of said wall 9 to a spring foil element 11, movable by clicking between two operative positions A (indicated schematically with a dashed line in fig. 2) and B. In a first position A, the foil element 11 mutually connects the first terminal 2 and the second terminal 4, in a second position B the first terminal 2 with the third one 3, said spring foil element 11 normally being in said first operative position A and being able to click to said second position B under the action of said transmission element 10 when the probe 1 measures a pre-determined temperature that entails a predetermined displacement of the wall or membrane 9 of the conversion member 8 and consequently a predetermined action of said transmission member on said foil element.

The part 6 of the body 5 of the thermostat further comprises a push-button reset member 12 housed in said body acting on which, from the exterior of said body, it is possible to make the foil element 11 click back from the second position B to the first position A, and a regulating member 13, partially housed in said body, rotating which it is possible to select, generally from a limited number of possibilities, the limit temperature, upon measurement whereof the thermostat is to click.

The thermometric probe 1, the conversion member 8 and the associated regulating member 13 are conventional for those skilled in the art and will therefore not be described in detail hereafter. According to the invention, all the components of the thermostat are housed in a single part 6 of the thermostat body, the foil element 11 is housed in the body 5 of the thermostat in an intermediate position between the conversion member 8 and the push-button member 12, and the axes L1 and L2, along which move, respectively, the pivot pin 16 of the transmission element 10 and the pivot pin 14 of the push-button 12, are mutually parallel and have a distance D of less than 10 mm, preferably about 1 or 2 millimetres. With this arrangement on one hand the assembly of the thermostat is simplified and made faster, because all of its components are grouped in a single housing, on the other hand the bulk of the member is reduce, given the substantially coaxial arrangement of the various moving parts of the thermostat which act on the foil element 11.

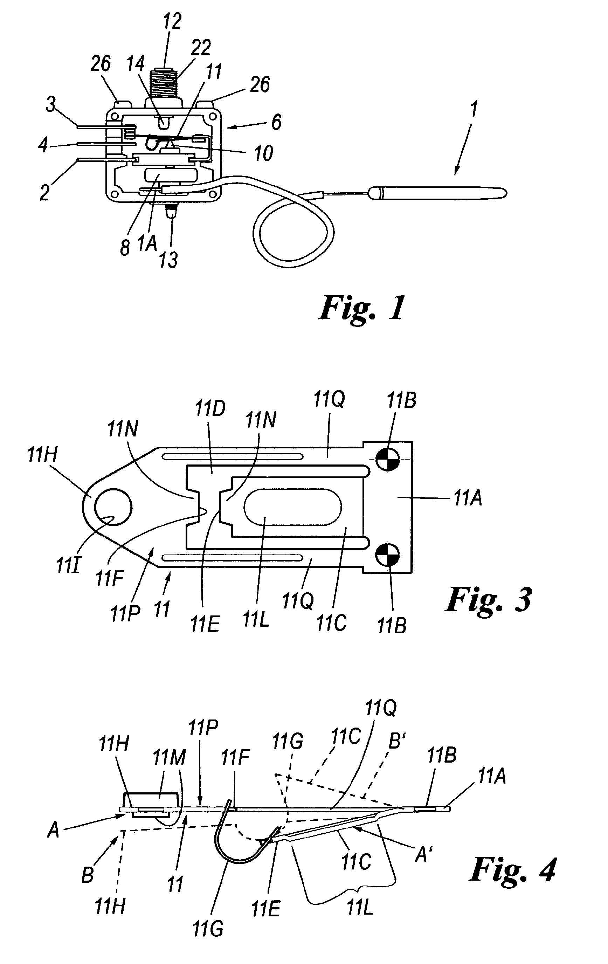

According to the invention, moreover, the three electric terminals are housed in three superposed seats 19 A-C, parallel and equidistant and all provided in a same lateral wall 17 of the part 6 of the body 5 of the thermostat. To this end, the lateral wall 17 comprises three slits into which is forcibly inserted a segment of the three terminals, said slits are closed by an edge of the lid of the body 5 when the latter is closed. Thanks to this arrangement of the terminals, all grouped and projecting from a same wall 17 of the body 5 of the thermostat, the latter can be secured to the member whereto it has to be associated in a plurality of different positions, all able to enable easily to access the terminals 2-4. The terminals 3 and 4 have the usual foil shape, whilst the main terminal 2 has a more elongated shape, bears on two shelves 23, 24 provided in the inner face of the two opposite lateral walls 17 and 21 of the part 6 of the body 5 of the thermostat, and comprises a central part 2A comprising a hole (not shown) for the passage of the pivot pin 15 of the element 10 for transmitting the conversion member 8, and a "C" shaped end 2B able to support the foil element 11. More in particular, on the central part 2 A of the terminal 2 is fitted a cover 24 made of plastic material that comprises, preferably obtained in a single piece, a tubular guide 20 for the pivot pin 15 which passes through the hole (not shown) provided in said terminal 2. This cover 24 has the dual purpose of achieving a stable and reliable positioning of the pivot pin 15 and at the same time isolating the membrane 9 from the terminal 2. The presence of this cover which needs only to be fitted on the terminal 2 makes assembling the thermostat simpler and faster. The terminal 2 extends within the body 5 for the entire length G (fig. 6) of the inner seat of the body. The foil element 11 is shaped as a "trampoline" elastic lever and it has (figs. 3, 4) an end segment 11A rigidly fastened to the free end of the C-shaped portion 2B of the electric terminal 2, to this purpose two holes 11B are provided. From this end segment 11A branches off a planar arm 11C separated from the body of the foil element by a U-shaped window 11 D delimited along its greater arms by strip portions 11Q, said planar arm 11C, having substantially rectangular shape, has its front side 11E connected to the base 11F of the U-shaped window by a spring 11G having U-shaped cross section, the other end 11H of the foil element has a seat 11I for a double plate 11M (fig. 2) able to come in contact with the terminals 3 and 4.

The base 11F and the end 11E of the arm 11C both comprise a tab 11N able to engage in a slit provided at the ends of the U-shaped spring 11G, such as removably to connect said spring to said base and end and to enable the movement of the arm between its two operative positions A' and B' (as shown in fig. 4). The arm 11C comprises a central area 11L (fig. 3), in the example slightly lowered relative to the other portions of the arm, whereon act the prod 14B of the reset push-button 12 and the prod of the element 10 for transmitting the displacement of the membrane 9.

The U-shaped spring 11G has the function of maintaining the foil element 11 either in the position A-A', in which the end 11I of the foil is in contact with the terminal 3, or in the other position B-B' in which said end 11I is in contact with the terminal 4. In its normal operation, in the thermostat the foil is in the position A-A', thereby putting in mutual contact the terminal 2 with the terminal 3, but when the probe 1 measures a predetermined temperature, the membrane 9 moves upwards and this movement is transmitted to the pivot pin 15 of the transmission element 10, and the prod 16A of said pivot pin 16 acting on the lower face of the arm 11C of the foil 11 thrust said arm upwards in the position B' (fig. 4) making the end 11H of the foil simultaneously click downwards (position B fig. 4) thereby enabling the contact of the terminals 2 and 4.

Pushing the reset member 12 downwards, the prod 14b of the related pivot pin 14 thrusts the arm 11C downwards in contrast to the spring 11G, causing said arm to click to its position A' and restoring the electrical contact between the terminals 2 and 3.

According to the invention, the particular shape of the foil element 11 comprising only two parts (the U-shaped spring and the planar body 11 A-L) facilitates and simplifies its construction, lowering the production and assembly costs of this component relative to those of know thermostats. It should also be stressed that according to the invention both the prong 14B of the pivot pin 14 of the reset member 12 and the prod 16 A of the pivot pin 16 of the transmission element 10 come in contact with a central part of the foil element and in particular with a central part 11L of the arm 11C at a distance D, and the contact points of said prods are mutually separated by a few millimetres, about 3 and anyway fewer than 10.

The push-button reset member 12 is of the conventional kind and it has the actuating pin 14 housed in a tubular portion 22 projecting from a wall 25 of the part 6 of the body 5 of the thermostat, the pivot pin 14 is, as usual, loaded by a spring (not shown) and kept in contrast to said spring in its seat, obtained in the portion 22, by a ring nut (not shown) fixed to the body of the pivot pin 14 in a position P (fig. 2) and which abuts against the inner face of the wall 25.

The pivot pin 14 has an outer portion 14A able to be thrust downwards in contrast to the spring, thereby bringing the other end, i.e. the prod 14B, in contact with the arm 11C of the foil element 11 such as to return it by clicking to its initial position, i.e. such as to connect the first terminal 2 with the second terminal 3.

According to the invention, from the wall 25 of the body 5 of the thermostat from which branches off the portion 22 that houses the push-button member, also branch off the conventional means 26 able to allow to fasten the thermostat to complementary means of a member whereto the thermostat is to be connected. The means 26 are advantageously positioned in such a way as to be substantially aligned along an axis L3 (fig. 6) with the projecting portion 22 and they are shaped as internally threaded tubular elements. Thanks to the alignment of the fastening means 26 with the member, the portion 22 in which the push-button member is housed the fastening of the thermostat is simplified. It should be stressed that also the particular positioning of the member 13 for regulating the limit temperature, in a position projecting from a wall 27 opposite to the one 25 from which the push-button member projects facilitates the access and actuation of said regulating member.

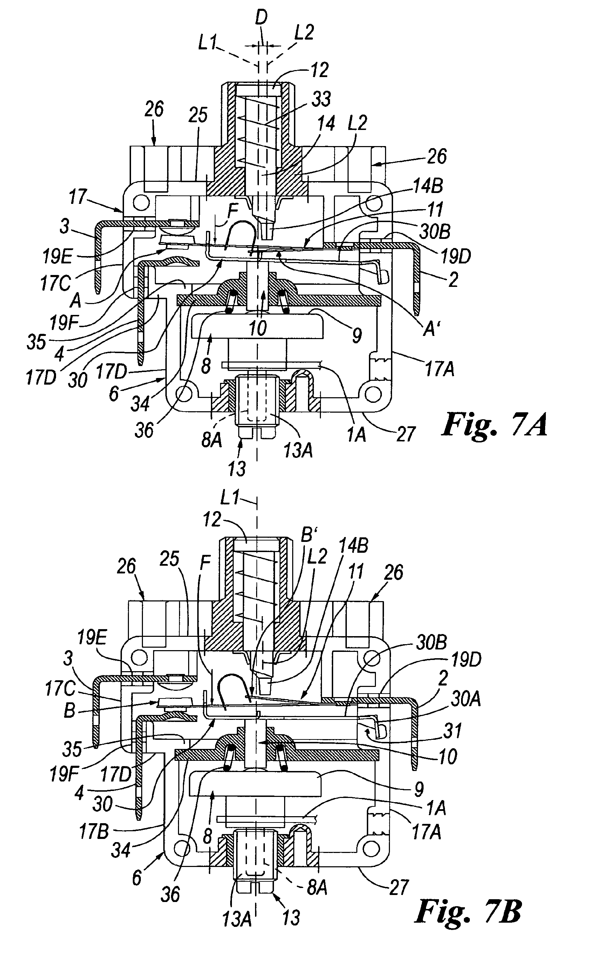

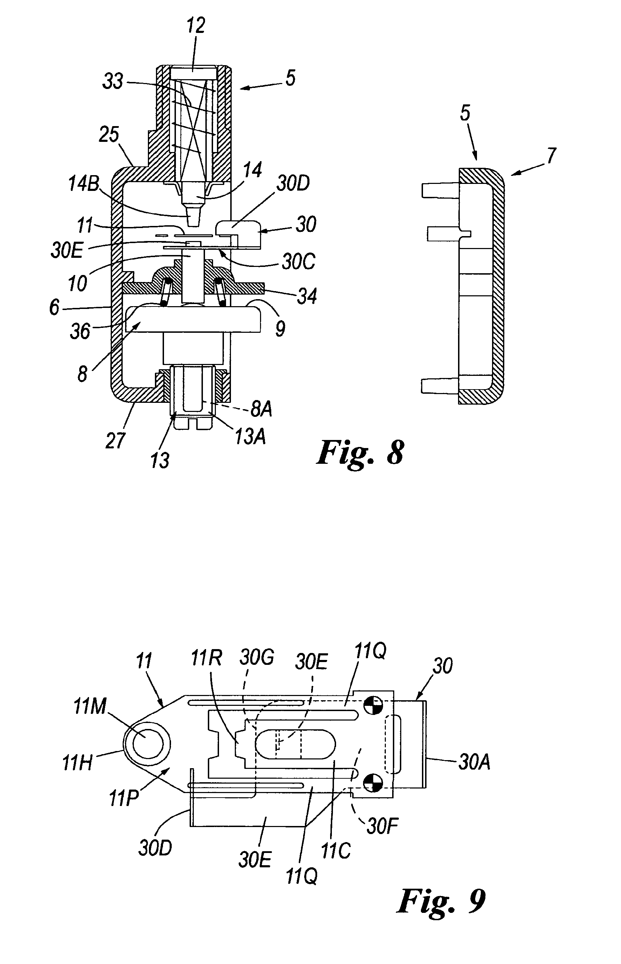

Figures 7 and 8 show a variant with respect to the embodiment illustrated hitherto, in the description of said variant and in the related drawings the components shared with the previous embodiment are indicated with the same number and will not be further described hereafter. According to said variant, the body 5 has a different shape, it also comprises a part 6 able to house all the components of the thermostat, but this part has the wall 17 with step shape, i.e. with two planar portions 17B and 17C parallel to each other and connected to each other from a planar portion 17 D. Moreover, the slits 19D, 19E, 19F for housing and holding a portion of the electric terminals 2, 3, 4 are now respectively obtained: in a wall 17 A parallel to the planar portions 17 C and B of the wall 17, in the portion 17C and in the portion 17 D of said wall 17. With this arrangement, there is a saving on the cost of the terminal 2 and a reduction of the overall bulk of the thermostat.

The foil element 11 is substantially identical to the one described previously and it is identically connected to an end of the terminal 2, but the U-shaped spring 11G, for size reasons, is rotated 180° relative to the solution of fig. 4, whilst still remaining fastened to the walls of the element 11 identically to the previous description and performing a similar action on the arm 11C. Between the foil element 11 and the movement transmission element 10 there is a spring member 30, shaped as a "trampoline spring" comprising a metallic foil 30 B having one end bent to L shape 30A inserted and fastened in a seat 31 provided in the wall 17 A of the portion 6 of the body 5 of the thermostat, a central part 30F, comprising at its front edge 30G and of its upper face a tooth 30E, and at its longer side a first arm 30E, coplanar to said central part, and at the end whereof branches off a second arm 30D perpendicular to the first. As shown in figure 9, the central part 30D is so dimensioned that when the member 30 and the element 11 are fastened to the respective seats, the tooth 30 E comes to be substantially underneath and in proximity to the front edge 11R of the arm 11C of the element 11, and the second arm 30D of the member 30 comes to be in the frontal portion 11P of the element 11.

As shall be explained below, the spring member 30 through its arm 30D is able, in determined situations, to exert on the foil element 11, and in particular on its end portion 11P, a force F directed downwards or towards the conversion member 8.

The upper end of the motion transmission element 10 is indirectly in contact with the central area 11L of the arm 11C of the foil element 11. Said upper end acts on the lower face of the central part 30F of the foil 30B of the member 30, at the front edge 30G of said central part, and said action is transmitted through the tooth 30E to the lower face of the central arm 11C of the foil element 11, at the front edge 11R of said central arm 11C.

In its normal operation, the foil element of the thermostat is in its position A-A' (fig. 7 A and fig. 4), thereby placing in mutual contact the terminal 2 and the terminal 3. In this situation, the only contact areas between the member 30 and the element 11 are the tooth 30E that is in contact with the lower surface of the arm 11C (fig. 7A).

It should be stressed that if, because of a failure or a malfunction of the probe and/or of the conversion member 8, due for example to a breakage of one of these components, there is a pressure drop in the member 8, this would also cause a lowering of the membrane 9 and consequently a reduction of the upward thrust exerted by the element 10 on the member 30; this would also cause said member 30, no longer contrasted by the element 10, to move downwards and consequently also the end 11H of the foil element to be moved downwards opening the contact between the terminals 2 and 3.

If the lowering of the membrane is sizeable, it can also cause the closing of the contact between the terminal 2 and the terminal 4. It should be stressed that in this situation it would not be possible to re-establish the interrupted contact between the terminals 2 and 3, even acting on the reset push-button 12. The member 30 thus has a safety function in case of malfunctions of the probe 1 or of the conversion member 8 and assures an immediate and automatic interruption of the electric contacts in case of malfunctions of these components.

In the course of the normal operation of the thermostat, when the probe 1 measures a pre-determined alarm temperature, the membrane 9 moves upwards and said predetermined movement is transmitted by the element 10, through the member 30 to the central area 11L of the arm 11 C of the foil element 11, thereby thrusting said arm in the position B' (fig. 4 and fig. 7B) and consequently the end part 11H of said element 11 downwards in the position B (fig. 4 and 7B) and consequently opening the contact between the terminals 2 and 3 and closing the contact between the terminals 2 and 4. In this situation, the member 30 exerts not force on the element 11.

Pushing the reset member downwards, in contrast to a spring 33, the prod 14B of the related pivot pin 14 thrusts downwards the arm 11C of the element 11, in contrast to the spring 11G, thereby causing said arm to click downwards to its position A' and consequently the end part 11H of said element 11 upwards to its position 11A restoring the electrical contact between the terminals 2 and 3. It should be stressed that this resetting operation can be performed only once the temperature measured by the probe drops below a predetermined value, and consequently the membrane 9 of the conversion member 8, has lowered by a predetermined value and consequently also the member 30 has moved to a substantially horizontal position (fig. 7B) which enables the arm 11C to click downwards to the position A'. It should also be stressed that the pivot pin 14 of the reset member is coaxial both with the longitudinal axis of the element 10 and with that of the conversion member 8. For reasons of bulk of the U-shaped spring 11G of the foil element 11, the prod 14b of the pivot pin 14 of the reset member was offset relative to the axis of the pivot pin itself.

According to this variant, the element 10 able to transmit the motion from the conversion member 8 to the elastic member 30 is housed in a through hole provided in a shelf 34 which bears on two shoulders 35 provided in the body 6. The member 8 in turn is connected to said shelf through a helical spring 36 centrally bearing on the membrane 9 and able to keep the conversion member 8 always bearing on the regulating member 13. The lower end of the member 8 as usual comprises a pivot pin 8A housed in a cavity of a pivot pin 13 A of the regulating member 13; screwing it in one direction or in the other one can adjust the position of the element 10 relative to the member 30 and to the element 11 and consequently the predetermined temperature whereat the thermostat has to "click". As usual, the thermostat can be constructed with the regulating member sealed after being calibrated on a predetermined safety temperature, or with the regulating member movable by the user of the thermostat in a predetermined number of positions corresponding to predetermined safety temperatures. Lastly, it should be repeated that the embodiment illustrated above is provided purely by way of example and that numerous variants are possible within the same innovative concept, so that for example the elastic member 30 could have a different shape or be of a different type, and nonetheless be able to assure the safety effect described above. According to an additional possible variant, the thermostat may not comprise the terminal 3, normally connected to the terminal 2 and hence operate as an on/off thermostat, in which latter case instead of the inner portion of the terminal 3 the thermostat would comprise a plastic shelf for the abutment of the end 11I of the foil 11. According to an additional embodiment, both the pivot pin 14 of the reset member and the related prod 14B that acts on the arm 11C of the foil element, the motion transmission element 10 and the conversion member 8 are all longitudinally coaxial to each other.

## Claims

1. A limiting thermostat of the type able to connect, upon the measurement of a pre-set temperature by a thermometric probe (1), a first electric terminal (2) with at least a second terminal (4); comprising a box body (5), formed by at least two parts (6, 7) that are fastened to each other such as to form said body and able to house within them: at least one portion of said terminals (2, 4), a conversion member (8) connected to said thermometric probe (1) and able to transform the signal of the thermometric probe into a movement of a wall or membrane (9) able to move along an axis (L1) as the temperature measured by said probe changes, a transmission element (10) able to transmit said movement of said membrane to a spring foil element (11), movable by clicking between two operative positions (A, B), in a first position (B) said element (11) mutually connecting said first terminal (2) to said second terminal (4), in the second position (A) opening the electric connection between said first and second terminal, (2, 4), said foil element (11) being normally in said second operative position (A) and being able to click to said first position (B) under the action of said transmission element (10) when the probe measures said predetermined temperature which entails a predetermined displacement of the membrane (9) of said conversion member (8) and consequently a predetermined action of said transmission element (10) on said foil element (11), and a push-button reset member (12) at least partially housed in said body acting whereon, from the exterior of said body, it is possible to make the foil element (11) return by clicking from said first operative position (B) to said second position (A), and a member (13) for regulating said predetermined temperature, at least partially housed in said body; **characterised in that** said foil element (11) is provided in said body (5) in an intermediate position between said conversion member (8) and said push-button reset member (12) and that said conversion member (8), foil element (11), and reset member (12) are substantially provided in series and mutually superposed.

2. Thermostat as claimed in claim 1 **characterised in that** the longitudinal axes (L1, L2) at least of said conversion member (8), of said transmission element (10), of said reset member (12) substantially coincide, or are parallel and separated by a distance (D) of less than 10mm, preferably less than 3mm.

3. Thermostat as claimed in claim 1 **characterised in that** said foil element comprises a substantially planar body (11), that said transmission element (10) acts directly or indirectly on a face of said planar body and that the push-button reset member (12) acts on the other face of said planar body (11).

4. Thermostat as claimed in claim 1 **characterised in that** it comprises safety means (30) able to bring the foil element (11) automatically to said first operative position (B) of mutual connection of the first (2) and second (4) terminal in case of failures or malfunctions of the probe (1) or of the conversion member (8).

5. Thermostat as claimed in claim 4 **characterised in that** the safety means (30) comprise a spring member (30), preferably shaped as a "trampoline spring", and comprising a metallic foil (30B), able to exert on the foil element (11), and in particular on an end portion thereof (11P), a force (F) directed towards the conversion element (8) and able automatically to bring said foil element (11) to its first operative position (A).

6. Thermostat as claimed in claim 4 **characterised in that** the safety means (30) are provided between the foil element (11) and the motion transmission element (10).

7. Thermostat as claimed in claim 1 **characterised in that** both the reset member (12) and the transmission element (10) act directly or indirectly on a central portion (11L) of the body (11) of the foil element and that said central portion of the foil element is a part (11L) of a flexible arm (11C) of the body (11) of the foil element.

8. Thermostat as claimed in claim 1 **characterised in that** the foil element (11) comprises, branching off from its fixed end segment (11A), a flexible planar arm (11C) separated from the body of the foil element by a window (11D), preferably U-shaped.

9. Thermostat as claimed in claim 8 **characterised in that** the flexible planar arm (11C), preferably having substantially rectangular shape, has a front side (11E) connected to a base (11F) of the window (11D) by a spring (11G) preferably having substantially U-shaped cross section.

10. Thermostat as claimed in claim 1, **characterised in that** from a wall (25) of the body (5) of the thermostat wherefrom branches off a portion (22) that houses the push-button reset member (12), branch off also means (26) able to allow to fasten the thermostat to complementary means of a device whereto the thermostat is to be connected, said means (26) being positioned in such a way as to be substantially aligned along a same axis (L) with said projecting portion (22).

11. Thermostat as claimed in claim 1, **characterised in that** the regulating member (13) comprises an actuating pivot pin (16), provided in a position projecting from a wall (27) opposite the wall (25) wherefrom projects the push-button reset member (12) and **in that** the longitudinal axes (L1) of said members (13, 12) are substantially coinciding or parallel and separated by a distance (D) of less than 10mm, preferably of less than 3mm.

12. Thermostat as claimed in claim 1 **characterised in that** it comprises a third electric terminal (3) connected to the first (2) only when the foil element (11) is in its second operative position (A).

13. Thermostat as claimed in claim 1 **characterised in that** all the components are housed in a plurality of seats provided in a single first part (6) of the body (5), the other part being shaped as a closing lid of said first part, and **in that** said body comprises only said two parts.

14. Thermostat as claimed in claim 4 **characterised in that** the spring element (30), comprises an elastic metallic foil.
